(19) **Europäisches Patentamt European Patent Office Office européen des brevets**

(11) **EP 1 985 365 A1**

(12) **EUROPEAN PATENT APPLICATION**
published in accordance with Art. 158(3) EPC

(43) Date of publication:
**29.10.2008 Bulletin 2008/44**

(51) Int Cl.:
***B01J 35/04*** *(2006.01)*

(21) Application number: **07714205.7**

(22) Date of filing: **14.02.2007**

(86) International application number:
**PCT/JP2007/052652**

(87) International publication number:
**WO 2007/094379 (23.08.2007 Gazette 2007/34)**

(84) Designated Contracting States:
**AT BE**

(30) Priority: **14.02.2006 JP 2006036185**

(71) Applicant: **NGK INSULATORS, LTD.**
**Nagoya-shi, Aichi 467-8530 (JP)**

(72) Inventor: **YAMAGUCHI, Shinji**
**Nagoya-shi, Aichi 467-8530 (JP)**

(74) Representative: **Paget, Hugh Charles Edward et al**
**Mewburn Ellis LLP**
**York House**
**23 Kingsway**
**London WC2B 6HP (GB)**

(54) **HONEYCOMB STRUCTURE AND HONEYCOMB CATALYST BODY**

(57)  A honeycomb structure having excellent catalyst-carrying properties and, when used as a honeycomb structure for a honeycomb catalyst body, excellent in purification efficiency and low in pressure loss, and mountable even in a limited space; and a honeycomb catalyst body excellent in purification efficiency and low in pressure loss, and mountable even in a limited space is provided. A honeycomb structure 1 for a catalyst carrier includes: porous partition walls 4 disposed so as to define plural cells 3 communicating between two end faces 2a, 2b and has numerous pores, and a gas-passage blocking portion 10 at least at end portions 2a, 2b of cells or in a part of the insides of cells to make gas substantially flow in partition walls 4 with a constitution where a pore diameter distribution of pores 25 of partition walls 4 (shown by a plotted graph with abscissas axis showing pore diameter size and ordinates axis showing pore volume) has two or more peaks with respect to pore capacity in a region where the pore diameter is 0.05 $\mu$m or more.

FIG.1

EP 1 985 365 A1

**Description**

Technical Field

The present invention relates to a honeycomb structure and a honeycomb catalyst body suitably used for purification of components to be purified such as carbon monoxide (CO), hydrocarbon (HC), nitrogen oxides (NO$_x$), and sulfur oxides (SO$_x$) contained in exhaust gas exhausted from automobile, construction machinery, or industrial stationary engines, combustion apparatuses, and the like.

Background Art

At present, a honeycomb catalyst body where a catalyst is carried on a honeycomb structure is used in order to purify exhaust gas exhausted from various kinds of engines and the like. As shown in Fig. 5, the honeycomb catalyst body has a structure where a catalyst layer 15 is loaded on the surface of partition walls 4 defining cells 3. In addition, as shown in Figs. 6 and 7, upon purifying exhaust gas by the use of the honeycomb catalyst body 60 (honeycomb structure 11), exhaust gas is sent into the cells 3 of the honeycomb catalyst body 60 from one end face 2a side to bring the exhaust gas into contact with the catalyst layer (not illustrated) on a surface of the partition walls 4 and then allowed to flow out to the outside from the other end face 2b (see, e.g., Patent Document 1).

In the case of purifying exhaust gas by the use of such a honeycomb catalyst body, it is necessary to facilitate transmission of components to be purified which is contained in the exhaust gas toward the catalyst layer on the surface of the partition walls from the exhaust gas as much as possible to improve purification efficiency. In order to improve efficiency of purifying exhaust gas, it is required to reduce the hydraulic diameter of the cells, to increase surface area of partition walls and the like. Specifically, there is employed a method where the number of cells per unit area (cell density) is increased or the like.

Here, it is known that a transmission rate of the components to be purified from exhaust gas toward the catalyst layer on the surface of the partition walls increases in inverse proportion to a square of a hydraulic diameter of the cells. Therefore, as the cell density is increased, the transmission rate of the components to be purified becomes higher. However, pressure loss also tends to increase in inverse proportion to a square of a hydraulic diameter of the cells. Therefore, there is such a problem that the pressure loss increases in accordance with improvement of transmission rate of the components to be purified.

Incidentally, the catalyst layer on a surface of the partition walls generally has a thickness of about several tens $\mu$m. Here, in the case that the components to be purified has insufficient diffusion rate in the catalyst layer, purification efficiency of the honeycomb catalyst body tends to be lowered. The tendency is remarkable particularly under low-temperature conditions. Therefore, if the amount of a catalyst to be carried on is increased to make up for the decrease of the purification rate, the catalyst layer becomes thick, and pressure loss rises. Though, in the case of the same amount of the catalyst, it is necessary to make the catalyst layer thin and to increase a catalyst-carrying area to secure the purification rate, however, there is a problem that cell density increases and pressure loss rises if the surface area is increased.

In order to lower the pressure loss with raising exhaust gas purification efficiency, it is necessary to increase an inflow diameter of the honeycomb catalyst and decrease a flow rate of exhaust gas to be passed therethrough. However, in the case that the honeycomb catalyst body is made into a large-scale or the like, mounting thereof is sometimes difficult because a space for mounting is limited, as far as, for example, a honeycomb catalyst body or the like to be mounted in an automobile is concerned.

Patent Document 1: JP-A-2003-33664

Disclosure of the Invention

The present invention has been made in view of the above problems of the prior art, and the object is to provide a honeycomb structure having excellent catalyst-carrying properties and, in the case of applying the honeycomb structure to a honeycomb catalyst body, excellent in purification efficiency and low pressure loss, and mountable even in a limited space; and a honeycomb catalyst body excellent in purification efficiency and low pressure loss, and mountable even in a limited space. Incidentally, the present invention is not directed to a filter for the purpose of trapping soot. Because it has a peak in pore diameter at 50 $\mu$m or more, blockage by soot is hardly caused to avoid rise in pressure loss even in the case that exhaust gas having soot flows.

In order to achieve the above object, there are provided the following honeycomb structure and honeycomb catalyst body.

[1] A honeycomb structure for a catalyst carrier comprising: porous partition walls disposed so as to form a plurality of cells communicating between the two end faces and has a large number of pores, and a gas-passage blocking portion (plugged portion) at least at end portions of the cells or in a part of the insides of the cells to make gas substantially flow through the partition walls;
wherein a pore diameter distribution of the partition walls (shown by a plotted graph with the axis of abscissas showing pore diameter size and the axis of ordinates showing pore volume) has two or more peaks with respect to pore volume in a region where the pore diameter is 0.05 $\mu$m or more, and
at least one of the two or more peaks is in the region where the pore diameter is 50 $\mu$m or more.

[2] A honeycomb structure according to the above [1] wherein, in a first peak (P1) and a second peak (P2) which are arbitrary two peaks among the two or more peaks, a pore volume (N1) at the first peak (P1) is 0.01 to 3.0 cc/g in the case that the pore volume (N1) is expressed by a logarithmic differential pore volume, and a pore volume (N2) at the second peak (P2) is 0.01 to 5.0 cc/g in the case that the pore volume (N2) is expressed by a logarithmic differential pore volume.

[3] A honeycomb structure according to the above [1], wherein, in a first peak (P1) and a second peak (P2) which are arbitrary two peaks among the two or more peaks, a ratio (N1:N2) of the pore volume (N1) at the first peak (P1) to the pore volume (N2) at the second peak (P2) is 1:100 to 10:1.

[4] A honeycomb structure according any one of the above [1] to [3], wherein a pore diameter size (S1) at the first peak (P1) is 1 to 35 $\mu$m, and a pore diameter size (S2) at the second peak (P2) is 50 to 500 $\mu$m.

[5] A honeycomb structure according to any one of the above [2] to [4], wherein a ratio (S1:S2) of the pore diameter size (S1) at the first peak (P1) to the pore diameter size (S2) at the second peak (P2) is 1:10000 to 4:5.

[6] A honeycomb catalyst body, wherein a catalyst is carried on a honeycomb structure according to any one of the above [1] to [5].

[7] A honeycomb catalyst body according to the above [6], wherein the honeycomb structure satisfies a condition of a pore diameter distribution in pores of the partition walls recited in any one of the above [1] to [5].

[8] An exhaust gas treatment system using a honeycomb structure according to any one of the above [1] to [5] or a honeycomb catalyst body according to the above [6] or [7].

According to the present invention, there are provided a honeycomb structure having excellent catalyst-carrying properties and, in the case of applying the honeycomb structure to a honeycomb catalyst body, excellent in purification efficiency and low in pressure loss, and mountable even in a limited space; and a honeycomb catalyst body excellent in purification efficiency and low in pressure loss, and mountable even in a limited space.

Brief Description of the Drawings

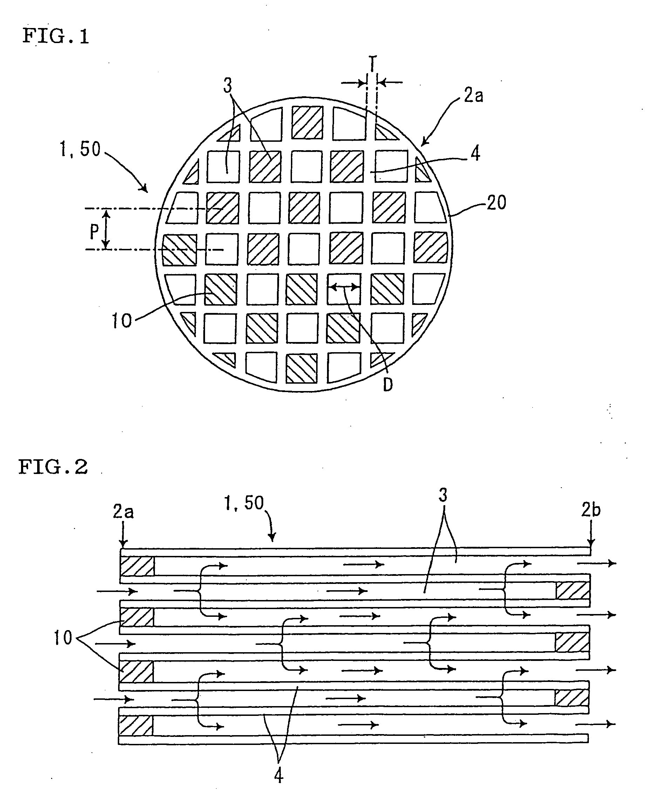

[Fig. 1]: an explanatory view schematically showing an embodiment of a honeycomb structure and honeycomb catalyst body of the present invention.
[Fig. 2]: a cross-sectional view of the honeycomb structure and honeycomb catalyst body shown in Fig. 1.

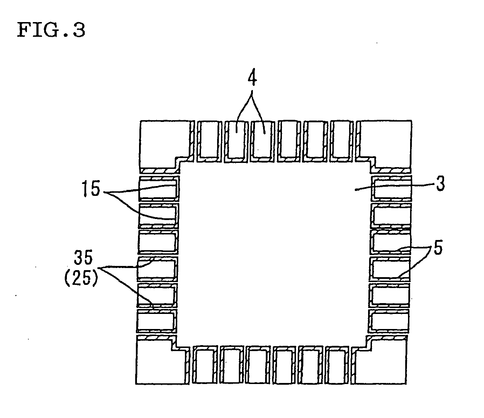

[Fig. 3]: a partially enlarged view of the honeycomb structure and honeycomb catalyst shown in Fig. 1.

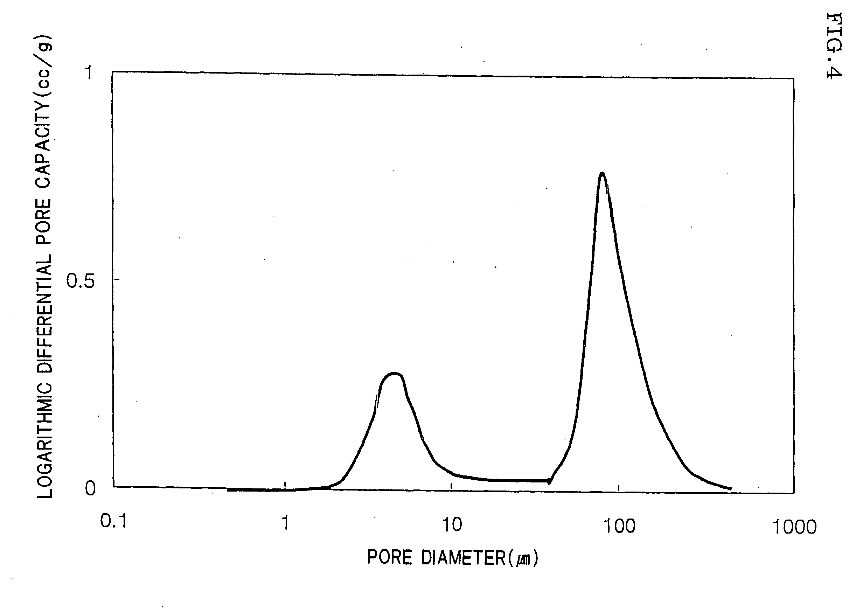

[Fig. 4]: a graph showing an example of a pore diameter distribution of pores in the partition walls of the honeycomb structure and honeycomb catalyst body shown in Figs. 1 to 3.

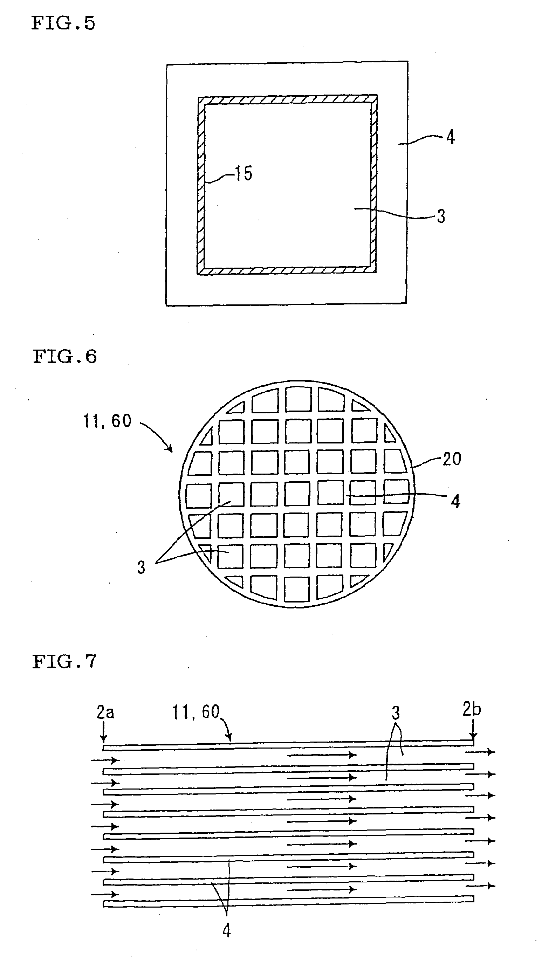

[Fig. 5]: a partially enlarged view schematically showing an example of a conventional honeycomb catalyst body.
[Fig. 6]: a front view schematically showing an example of a conventional honeycomb structure and honeycomb catalyst body.
[Fig. 7]: a cross-sectional view schematically showing an example of a conventional honeycomb structure and honeycomb catalyst body.

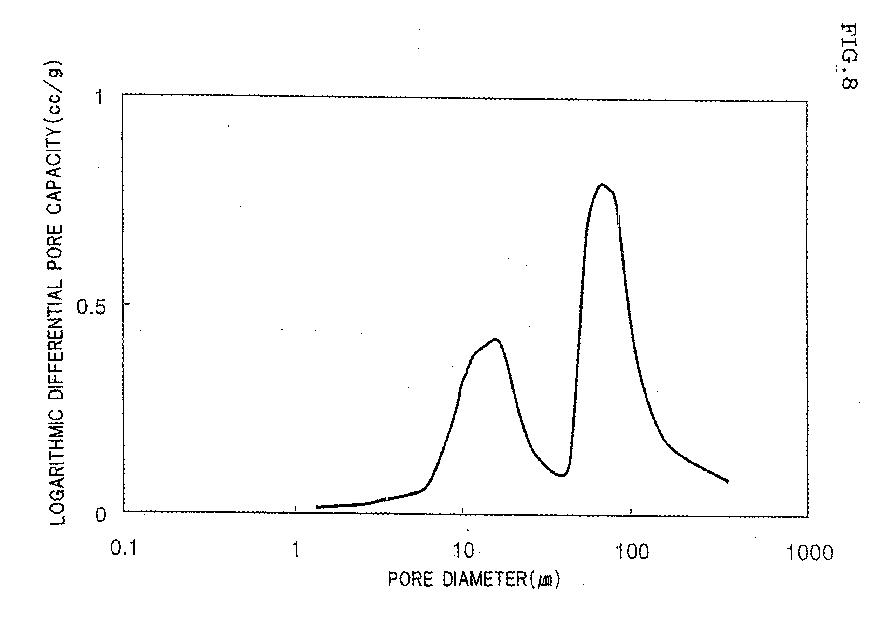

[Fig. 8]: a graph showing a pore diameter distribution of the pores in the partition walls of the honeycomb catalyst body of Example 4.

Explanation of Symbols

1: honeycomb structure, 2a: end face, 2b: end face, 3: cell, 4: partition wall, 5: catalyst layer, 10: gas passage blocking portion, 15: catalyst layer, 11: honeycomb structure, 20: outer wall, 21: honeycomb structure, 25: pore, 31: honeycomb structure, 35: catalyst layer-carrying pore, 41: honeycomb structure, 50: honeycomb catalyst body, 60: honeycomb catalyst body, D: cell hydraulic diameter, H: rib-remaining height, P: cell pitch, T: partition wall thickness.

Best Mode for Carrying Out the Invention

A best mode for carrying out the present invention will hereinbelow be described specifically with reference to drawings.

Fig. 1 is an explanatory view schematically showing an embodiment of a honeycomb structure and honeycomb catalyst body of the present invention. Fig. 2 is a cross-sectional view of a honeycomb structure and honeycomb catalyst body shown in Fig. 1. Fig. 3 is a partially enlarged view of the honeycomb structure and honeycomb catalyst shown in Fig. 1. Fig. 4 is a graph showing an example of a pore diameter distribution of pores in the partition walls of the honeycomb structure and honeycomb catalyst body shown in Figs. 1 to 3. As shown in Figs. 1 to 4, a honeycomb structure of the present embodiment is a honeycomb structure 1 for carrying a catalyst provided with porous partition walls 4 having a large number of pores 25 (see Fig. 3) disposed so as to form a plurality of cells 3 extending between the two end faces 2a and 2b and plugged portions 10 disposed so as to alternately plug one of the end portions of each cell 3 at two end faces 2a and 2b, and characterized in that a pore diameter distribution of the pores 25 of the partition walls 4 (shown by a plotted graph with the axis of abscissas showing pore diameter size and the axis of ordinates showing pore volume) has two or more peaks (two peaks P1 and P2 shown in Fig. 4) with respect to pore volume in a region where the pore diameter is 0.5 $\mu$m or more. Incidentally, in Fig. 1, the reference numeral 20 and the symbols P, D, and T represent outer wall, cell pitch, hydraulic diameter, and partition wall thickness, respectively.

Thus, by having two or more peaks in a region where the pore diameter is 0.05 $\mu$m or more, preferably 0.5 $\mu$m or more, a catalyst layer is loaded in the pores showing one peak, and pores showing another peak function as a flow passage for introducing the catalyst layer in the partition walls in a catalyst-carrying step and as a substantial exhaust gas flow passage having a large surface area after the catalyst is carried. As a result, there can be provided a honeycomb structure having excellent catalyst-carrying properties and, in the case of applying the honeycomb structure to a honeycomb catalyst body, there is provided a honeycomb structure capable of using as a honeycomb catalyst body excellent in purification efficiency due to the increase of the catalyst-carrying surface area and low in pressure loss since a pore diameter showing another peak is not narrowed because a catalyst is impregnated and kept in the pores showing one peak, and mountable even in a limited space.

In the present embodiment, it is preferable that at least one of the two or more peaks is in the region where the pore diameter is 50 $\mu$m or more, and more preferably 71 $\mu$m or more. In the case that exhaust gas containing soot flows therein, it is preferable that the peak is in the region where the pore diameter is 100 $\mu$m or more, and more preferably 150 m or more in that a rise in pressure loss due to blockage of soot can be avoided.

Thus, by allowing at least one of the two or more peaks to be in the region where the pore diameter is 50$\mu$ m or more, a catalyst can be introduced into walls and carried thin and uniformly without blocking pores to secure a large catalyst-carrying area. Therefore, improvement in purification efficiency and reduction in pressure loss can be planned.

In the present embodiment, in a first peak (P1) and a second peak (P2) which are arbitrary two peaks among the two or more peaks, a pore volume (N1) at the first peak (P1) is preferably 0.01 to 3.0 cc/g, more preferably 0.1 to 1.5 cc/g, in the case that the pore volume (N1) is expressed by a logarithmic differential pore volume because strength can be secured without causing pressure loss, and a pore volume (N2) at the second peak (P2) is preferably 0.01 to 5.0 cc/g, more preferably 0.4 to 2.0 cc/g, in the case that the pore volume (N2) is expressed by a logarithmic differential pore volume because strength can be secured without causing pressure loss. Incidentally, a "logarithmic differential pore volume" means dV/d(logD). This means the value obtained by plotting a value obtained by dividing a difference pore volume dV by a difference value d (logD) of logarithms of pore diameter with respect to the mean pore diameter of each section (see explanation in http://www.shimadzu.co.jp/powder/lecture/practice/p02/lesson 06.html).

When the value is outside the range from 0.01 to 3.0 cc/g in the case that pore volume (N1) at the first peak (P1) is represented by a logarithmic differential pore volume, or when the value is outside the range from 0.01 to 5.0 cc/g in the case that pore volume (N2) at the second peak (P2) is represented by a logarithmic differential pore volume, catalyst-carrying properties, purification efficiency, and pressure loss sometimes deteriorate.

It is preferable that a ratio (N1:N2) of the pore volume (N1) at the first peak (P1) to the pore volume (N2) at the second peak (P2) is 1:100 to 10:1. When it is outside the range, catalyst-carrying properties, purification efficiency, and pressure loss sometimes deteriorate. The former is good in pressure loss properties, and the latter is excellent in purification efficiency, catalyst-carrying properties, and strength. The ratio is preferably 1:30 to 10:12 in consideration of a balance between pressure loss and catalyst-carrying properties, purification efficiency, and strength.

In the present embodiment, a pore diameter size (S1) at the first peak (P1) is preferably 1 to 35 $\mu$m, more preferably 1 to 10 $\mu$m for securing a strength or 10 to 30 $\mu$m from the viewpoint of catalyst performance and pressure loss, and a pore diameter size (S2) at the second peak (P2) is preferably 50 to 500 $\mu$m, more preferably 71 to 300 $\mu$m because soot blockage is hardly caused and high purification rate can be obtained. When the pore diameter size (S1) at the first peak (P1) is outside the range from 1 to 35 $\mu$m, or when a pore diameter size (S2) at the second peak (P2) is outside the range from 50 to 500 $\mu$m, catalyst-carrying properties, purification efficiency, and pressure loss sometimes deteriorate.

In the present embodiment, a ratio (S1:S2) of the pore diameter size (S1) at the first peak (P1) to the pore diameter size (S2) at the second peak (P2) is preferably 1:10000 to 4:5, more preferably 1:600 to 1:5. When the ratio (S1:S2) of the pore diameter size (S1) at the first peak (P1) to the pore diameter size (S2) at the second peak (P2) is outside the range from 1:10000 to 4:5, catalyst-carrying properties, purification efficiency, and pressure loss sometimes deteriorate.

In addition, it is preferable that a distribution density of a plurality of cells 3 per unit volume is 7 to 200 cells/cm$^2$, that the partition walls 4 have a thickness of 0.03 to 1 mm, that the mean pore diameter is 10 to 500 $\mu$m, and that the porosity is 40 to 80%, and it is more preferable that a distribution density of a plurality of cells 3 per unit volume is 12 to 120 cells/cm$^2$, that the partition walls 4 have a thickness of 0.1 to 0.6 mm, that the mean pore diameter is 45 to 200 $\mu$m, and that the porosity is 48 to 65%. When the distribution density of a plurality of cells 3 per unit volume is below 7 cells/cm$^2$, purification performance sometimes deteriorates. When it is above 200 cells/cm$^2$, the pressure loss increases, and sometimes engine output deteriorates. When the partition walls 4 have a thickness of less than 0.03 mm, canning is sometimes impossible because of weak strength. When the partition walls 4 has a thickness of above 1 mm, the pressure loss increases, and sometimes engine output deteriorates. When the mean pore diameter is below 10 $\mu$m, particulates in exhaust gas are trapped to sometimes cause blockage of pores. When it is above 500 $\mu$m, purification performance sometimes deteriorates. When the porosity is below 40%, a partition wall-passing flow rate increases, and purification performance sometimes deteriorates. When it is above 75%, strength sometimes becomes insufficient.

Incidentally, the definition of "porosity" will be described later.

By such a constitution, catalyst-carrying properties and purification performance are excellent, deterioration of engine output is not caused with pressure loss being within a permissible range, blockage due to particulates in exhaust gas is not caused, and the performance can be maintained for a long period.

Suitable examples of the material constituting the honeycomb structure 1 of the present embodiment include materials containing ceramic as the main component and sintered metals. Specifically, in the case of a material containing ceramic as the main component, suitable examples of the ceramic includes silicon carbide, cordierite, aluminum titanate, sialon, mullite, silicon nitride, zirconium phosphate, zirconia, titania, alumina, silica, and a combination thereof. Particularly, ceramics such as silicon carbide, cordierite, mullite, silicon nitride, alumina, and aluminum titanate are suitable because of their alkali resistant properties. Of these, oxide-based ceramics are preferable from the viewpoint of costs.

The honeycomb structure 1 of the present embodiment has a thermal expansion coefficient in a direction of cell extension at 40 to 800°C of preferably below $1.0 \times 10^{-6}$/°C, more preferably $0.8 \times 10^{-6}$/°C in the case of being loaded under a floor of an automobile, and particularly preferably below $0.5 \times 10^{-6}$/°C in the case of being loaded right below an engine. When it is below $1.0 \times 10^{-6}$/°C, generated thermal stress upon exposure at high temperature can be controlled within a permissible range to inhibit the honeycomb structure from being broken due to thermal stress.

In addition, a cross-section along a plane perpendicular to a direction of cell extension of the honeycomb structure 1 of the present embodiment has a shape suitable for the internal shape of an exhaust gas system where the honeycomb structure 1 is to be installed. Specifically, a circle, an oval, an ellipse, a trapezoid, a triangle, a quadrangle, a hexagon, or an asymmetric deformed shape can be employed. Of these, a circle, an oval, and an ellipse are preferable.

A honeycomb structure of the present invention can be manufactured according to a conventionally known method for manufacturing a diesel particulate filter (DPF). Therefore, for example, by suitably adjusting a chemical composition of the material, by suitably selecting a particle size of the raw material, and further, in the case of obtaining a porous structure by using a pore former by suitably adjusting the kind, the particle size, the amount, and the like, of the pore former, the porosity and the pore diameter can be controlled to be within predetermined ranges.

Next, an embodiment of a honeycomb catalyst body of the present invention will hereinbelow be described. As shown in Figs. 1 to 3, a honeycomb catalyst body 50 of the present embodiment is formed by carrying a catalyst on the aforementioned honeycomb structure 1 and shown as one having a honeycomb structure 1 and a catalyst layer 5 containing a catalyst in Fig. 3. The catalyst layer 5 is loaded on the internal surfaces of the pores 25, and a large number of catalyst-carrying pores 35 are formed inside the partition walls 4. Incidentally, adjacent cells 3 communicate with each other through the catalyst-carrying pores 35. In addition, a catalyst layer 15 may be formed on the internal surface except for the catalyst-carrying pores 35 of the cells 3.

In the honeycomb catalyst body 50 of the present embodiment, where a catalyst layer 5 is loaded on the internal surfaces of the pores 25 of the honeycomb structure 1 as described above, carbon particulates and the like contained in exhaust gas exhausted from a diesel engine is hardly trapped by the partition walls 4 of the honeycomb structure 1, and almost all of them pass through the partition walls 4. That is, as shown in Fig. 2, exhaust gas flows into cells 3 of the honeycomb catalyst body 50 from one end face 2a side, passes through partition walls 4, moves to the adjacent cells 3, and flows out from the other end face 2b. Therefore, a honeycomb catalyst body 50 of the present embodiment has low pressure loss and hardly has a rise in pressure loss even in the case of using it for a long period.

The honeycomb catalyst body 50 of the present embodiment, which is different from conventional honeycomb catalyst body and has no gas passage blocking portion (synonymous with plugged portion) where catalyst layer 5 is loaded on the internal surfaces of the of the cells 3, has a structure having the catalyst layer 5 loaded also on the internal surfaces of the pores 25 of the cells 3 (partition walls 4) and provided with a gas passage blocking portion at least in a part of the end portions or the inside of the cells to substantially allow the gas to flow through partition walls. By the increase of the surface area, a contact chance of gas with a carrier increases to give a compact catalyst body excellent in purification efficiency in comparison with a conventional honeycomb catalyst body and mountable even in a limited space.

It is preferable that, in a honeycomb catalyst body 50 of the present embodiment, a honeycomb structure 1 satisfies conditions of pore diameter distribution in pores of the partition walls as described above in a state of carrying a catalyst. By such a constitution, the aforementioned effect can thoroughly be exhibited.

In addition, as described above, in a state that a catalyst layer 5 is loaded, that is, in a state that a catalyst-carrying pores 35 are formed, the partition walls 4 has a porosity of preferably 30 to 75%, more preferably 40 to 65%. When it is below 30%, a partition wall-passing flow rate increases, and purification performance sometimes deteriorates. When it is above 75%, strength sometimes becomes insufficient.

Examples of the catalyst contained in the catalyst layer 5 constituting the honeycomb catalyst body 50 of the present embodiment include (1) a three way catalyst for purifying gasoline engine exhaust gas, (2) an oxidation catalyst for purifying a gasoline engine or diesel engine exhaust gas, (3) a SCR catalyst for selectively reducing $NO_x$, and (4) a $NO_x$ adsorbing catalyst.

The three way catalyst for purifying gasoline engine exhaust gas includes a carrier coat for coating partition walls of a honeycomb structure (honeycomb catalyst carrier) and a noble metal dispersedly carried inside the carrier coat. The carrier coat is constituted of, for example, active alumina. In addition, suitable examples of the noble metal dispersedly carried inside the carrier coat include Pt, Rh, Pd, and a combination thereof. The carrier coat further contains, for example, a compound such as ceria, zirconia, or silica, and a mixture thereof. Incidentally, it is preferable that the total amount of the noble metals is 0.17 to 7.07 g per liter of the volume of the honeycomb structure.

In the oxidation catalyst for purifying a gasoline engine or diesel engine exhaust gas, a noble metal is contained. The noble metal is preferably one or more kinds selected from a group consisting of Pt, Rh, and Pd. Incidentally, it is preferable that the total amount of the noble metals is 0.17 to 7.07 g per liter of the volume of the honeycomb structure. In addition, the SCR catalyst for selectively reducing $NO_x$ contains at least one kind selected from the group consisting of a metal-substituted zeolite, vanadium, titania, tungsten oxide, silver, and alumina.

The $NO_x$ adsorbing catalyst contains an alkali metal and/or an alkali earth metal. Examples of the alkali metal include K, Na and Li. Examples of the alkali earth metal include Ca. Incidentally, it is preferable that the total amount of K, Na, Li and Ca is 0.5 g or more per liter of the volume of the honeycomb structure.

A honeycomb catalyst body of the present invention can be manufactured by carrying a catalyst on the aforementioned honeycomb structure in a manufacturing method according to a conventionally known method. To be concrete, in the first place, catalyst slurry containing a catalyst is prepared. Next, the catalyst slurry is coated on the surfaces of the pores of the partition walls of a honeycomb structure by suction or the like. Then, the slurry is dried at room temperature or under heating conditions to obtain a honeycomb catalyst body of the present invention.

A honeycomb structure and a honeycomb catalyst body of the present embodiment can effectively be used for various kinds of exhaust gas treating systems.

Examples

Next, the present invention will be described in more detail on the basis of examples. However, the present invention is not limited to these examples. Incidentally, in the present examples, the pore diameter, pore distribution, porosity, catalyst-carrying properties, purification index, and pressure loss were measured as follows:

[Pore diameter and pore distribution]

The pore diameter and pore distribution were measured with a mercury porosimeter according to JIS R1655-2003 in the case that the pore diameter is 300 $\mu$m or less. Specifically, a sample of 1 cm$^3$ is cut out and measured to obtain a correlation between pore diameter and pore volume to determine as "pore distribution", and the mean pore diameter in each section for measurement is defined as "pore diameter". The pore diameter section for measurement can be defined by using a mercury porosimeter on the market and calculated from the pressure upon penetrating mercury as described below. The pore diameter section for measurement preferable has the same intervals in terms of logarithm and is divided into 8 to 16 sections in each digit of a pore diameter, and also divided into 3 to 8 sections in a region of 1 $\mu$m or less. Examples of pressure measured by mercury penetration method are shown in Table 1.

[Table 1]

| Pressure by mercury penetration ($\rho$sia) | Converted pore diameter ($\mu$m) |
|---|---|
| 0.60 | 300.00 |
| 0.66 | 272.10 |

(continued)

| Pressure by mercury penetration (ρsia) | Converted pore diameter (μm) |
|---|---|
| 0.95 | 190.71 |
| 1.24 | 145.26 |
| 1.55 | 116.81 |
| 1.95 | 92.70 |
| 2.45 | 73.53 |
| 3.05 | 59.24 |
| 3.83 | 47.08 |
| 4.84 | 37.26 |
| 6.13 | 29.44 |
| 7.82 | 23.08 |
| 9.91 | 18.20 |
| 12.52 | 14.42 |
| 15.80 | 11.42 |
| 20.09 | 8.98 |
| 23.48 | 7.69 |
| 26.63 | 6.78 |
| 28.19 | 6.40 |
| 29.76 | 6.06 |
| 33.76 | 5.35 |
| 37.81 | 4.77 |
| 47.84 | 3.77 |
| 60.77 | 2.97 |
| 76.98 | 2.34 |
| 97.42 | 1.85 |
| 198.39 | 0.91 |
| 822.11 | 0.22 |
| 3407.88 | 0.05 |
| 9961.32 | 0.02 |

A noise such as pressure fluctuations upon measuring pore diameters is ignored.

In the case that a pore diameter is 300 μm or more, a pore diameter was measured by image analysis, a gap area ratio of each pore diameter was calculated. Specifically, at least five visual fields of a SEM photograph of a cross-section of a partition wall were observed with respect to a visual field of targeted pore diameter magnified 10 to 100 times. Since there is sometimes a case of insufficient thickness of partition wall at the cross-section, a visual field in at least one direction should be secured in that case. Next, the maximum linear distance and the gap area in each gap are measured in each visual field observed. The measurement can be achieved by image-processing the observed photographs. In the case that a gap seems to be communicated with another gap, it is considered that one tenth of a gap with respect to the maximum diameter is not communicated with another gap. The maximum diameter and the gap area of each gap are obtained by the above method, and a gap area ratio of each pore diameter is obtained from a ratio of the maximum diameter and the gap area of each gap to the total gap area. In the case of comparing continuity of a pore diameter of 300 μm or lower, a logarithmic differential volume can be expressed by each ratio as relative comparison employing 300 μm which functions as a boundary and a gap area ratio as a standard. The pore diameter section is determined to give the same intervals by a logarithm. The section is determined by dividing pore diameter region of 100 to 1000 μm into 8 or more and 16 or less.

[Porosity]:

In the case that a pore diameter is 300 μm or less, measurement was performed with a mercury porosimeter. To be concrete, a sample of 1 cm³ is cut out to measure a pore volume to obtain a "porosity" by a following method.

$$Pore\ diameter = total\ pore\ volume/((1/true\ specific\ gravity) + total\ pore\ volume)$$

In the case that a pore diameter is 300 $\mu$m or more, the porosity was obtained from the ratio of the weight per volume obtained from a material theoretical density to the actual weight of a test piece.

$$porosity = (1-(actual\ weight\ of\ test\ piece\ /\ weight\ obtained\ from\ theoretical\ density)) \times 100$$

In the case of obtaining porosity from a test piece having a honeycomb structure, calculation should be performed in consideration of the cell shape (opening ratio).

[Catalyst-carrying properties]:

An SEM photograph of a partition wall cross-section was observed to check if a catalyst is carried on even inside the partition walls, and catalyst-carrying properties were judged by the amount of the catalyst carried on the surface of the cell inner wall. The catalyst is carried preferably on 20% or more of a partition wall thickness, and more preferably up to the whole thickness of the partition wall. A catalyst-carrying portion here shows the inside of the pores having one peak and communicating with each other in the direction of the partition wall thickness. Incidentally, in the table, "very good" means 40 to 100% carried, "good" means 20 to 40% carried, and "poor" means <10% carried.

[Purification index]:

Combustion gas containing 7% by volume of oxygen, 10% by volume of steam, 10% by volume of carbon dioxide, 200 ppm (carbon amount in terms of molar ratio) of hydrocarbon, and nitrogen as balance is allowed to flow into a honeycomb structure and a honeycomb catalyst body at a temperature of 200°C and at a space velocity (SV) of 100000 h$^{-1}$. From a hydrocarbon concentration of the combustion gas before and after inflow thereof, a purification rate (%) was calculated. A purification rate (standard purification rate (%)) was calculated by the use of a honeycomb catalyst body for comparison, and a purification index (%) was calculated as a rate with respect to the standard purification rate. Here, a purification index = 200% means twice the purification rate of a honeycomb catalyst body for comparison. Incidentally, a honeycomb catalyst body for the application to an automobile, the case that a catalyst is carried on a simple honeycomb structure (without plugged portion) having a cell density of 600 cpsi (93 cells/cm$^2$) and a partition wall thickness of 4.5 mil(0.1143 mm) was employed for comparison. In a honeycomb catalyst body for the industrial application, the case that a catalyst is carried on a simple honeycomb structure (without plugged portion) having a cell density of 30 cpsi (4.65 cells/cm$^2$) and a partition wall thickness of 32 mil(0.8128 mm) was employed for comparison. In Table, "very good" means >150%, "good" means 100 to 150%, and "poor" means <70%.

[Pressure loss]:

After the exhaust gas was sent into the honeycomb structure for a period of time corresponding to the soot generation of 3 g/L per volume of the honeycomb structure, pressure loss upon sending the air of 2.4 Nm$^3$/minL per volume of a honeycomb structure was measured. Incidentally, in Table, "very good" means <7.5kPa, "good" means 7.5 to 10 kPa, "acceptable" means 10 to 15 kPa, and "poor" means >15kPa.

(Examples 1 to 7)

To about 100 parts by mass of a cordierite-forming raw material prepared at a predetermined percentage of a chemical composition of 42 to 56% by mass of $SiO_2$, 0 to 45% by mass of $Al_2O_3$, and 12 to 16% by mass of MgO by a combination of a plurality of materials selected from the group consisting of talc, kaolin, calcined kaolin, alumina, calcium hydroxide, and silica were added 12 to 25 parts by mass of graphite and 5 to 15 parts by mass of a synthetic resin as a pore former. After suitable amounts of a methylcellulose and a surfactant were further added, water was added, followed by kneading to prepare clay. The prepared clay was subjected to vacuum de-aeration and then to extrusion forming to obtain a honeycomb formed body. After the obtained honeycomb formed body was dried and fired at a temperature range with the highest temperature of 1400 to 1430°C, a honeycomb fired body was obtained. At one of the end portions each of the cells of the obtained honeycomb fired body was plugged to give a checkered pattern, followed to manufacture honeycomb structures (product Nos. 1 to 7) each having a diameter of 144 mm and the whole length of 152 mm having a pore structure of the partition walls as shown in Table 2 (Though the obtained honeycomb structures are intrinsically examples of the present invention and could be indicated by the numbers of Examples, for convenience' sake, the honeycomb structures were indicated by product numbers, and final honeycomb catalyst bodies manufactured by the honeycomb structures were indicated with the numbers as Examples.) Incidentally, a pore structure of the partition walls was adjusted by suitably adjusting a chemical composition of a cordierite-forming raw material, a particle diameter of a pore former, an amount of the pore former, and the like. In addition, plugged portions had a plugging depth of 5 mm from an end face.

Next, there was prepared catalyst slurry containing platinum (Pt) as a noble metal, active alumina, and ceria as an oxygen adsorbent. By suction, a coat layer of the prepared catalyst slurry was formed on the internal surfaces of the partition walls and the internal surfaces of the pores of each of the product Nos. 1 to 7 obtained above. Next, by heat-drying, there were manufactured a honeycomb catalyst bodies (Examples 1 to 7) having the partition walls as a porous structure (with a catalyst layer). Incidentally, the amount of the noble metal (Pt) per liter of the honeycomb structure (carrier) was controlled to be 2g. In addition, a coating amount of catalyst slurry per liter of the honeycomb structure (carrier) was controlled to be 100 g.

Table 2 shows the product number, diameter $\times$ length, cell density (cpsi), cell density ($1/cm^2$), partition wall thickness (mil), partition wall thickness (mm), pore diameter, region where a peak is present, logarithmic differential pore volume of the first peak (P1), logarithmic differential pore volume of the second peak (P2), ratio (N1:N2) of the pore volume (N1) at the first peak (P1) to the pore volume (N2) at the second peak (P2), size (S1) of pore diameter of the first peak (P1), size (S2) of the pore diameter of the second peak (P2), ratio (S1:S2) of the pore diameter size (S1) at the first peak (P1) to the pore diameter size (S2) at the second peak (P2), porosity, catalyst-carrying properties, purification index, and pressure loss of each of the honeycomb structures used for each of the honeycomb catalyst bodies manufactured in Examples 1 to 7.

(Comparative Examples 1 to 5)

There were manufactured honeycomb structures (product numbers were Comparative examples 1 to 5) which have the same structure as in Example 1 and which were different in cell density, rib thickness, pore diameter, and pore distribution, and catalyst bodies were manufactured in the same manner as in Example 1 using the honeycomb structures. Table 2 shows the product number, diameter $\times$ length, cell density (cpsi), cell density ($1/cm^2$), partition wall thickness (mil), partition wall thickness (mm), pore diameter, region where a peak is present, logarithmic differential pore volume of the first peak (P1), logarithmic differential pore volume of the second peak (P2), ratio (N1:N2) of the pore volume (N1) at the first peak (P1) to the pore volume (N2) at the second peak (P2), size (S1) of pore diameter of the first peak (P1), size (S2) of the pore diameter of the second peak (P2), ratio (S1:S2) of the pore diameter size (S1) at the first peak (P1) to the pore diameter size (S2) at the second peak (P2), porosity, catalyst-carrying properties, purification index, and pressure loss of each of the honeycomb structures used for each of the honeycomb catalyst bodies manufactured in Comparative Examples 1 to 5.

[Table 2]

| | Product No. | Diameter mm | Length mm | Wall thickness $\mu$m | Cell density cpsi | Pore diameter $\mu$m | P1 log. volume cc/g | P2 log. volume cc/g | N1/N2 volume ratio | S1: pore diameter $\mu$m | S2: pore diameter $\mu$m | S1/S2: pore diameter ratio | Catalyst-carrying properties | Purification performance | Pressure loss |
|---|---|---|---|---|---|---|---|---|---|---|---|---|---|---|---|
| Example 1 | 1 | 144 | 152 | 12 | 300 | --- | 0.25 | 0.7 | 9/250 | 5 | 100 | 1/20 | Good | Very Good | Very Good |
| Example 2 | 2 | 144 | 152 | 12 | 300 | --- | 0.25 | 0.7 | 9/250 | 5 | 50 | 1/10 | Good | Good | Good |
| Example 3 | 3 | 144 | 152 | 12 | 300 | --- | 0.05 | 0.05 | 1/1 | 5 | 100 | 1/20 | Good | Good | Aceeptable |
| Example 4 | 4 | 144 | 152 | 12 | 300 | --- | 0.4 | 0.75 | 57/100 | 15 | 100 | 3/20 | Very Good | Very Good | Good |
| Example 5 | 5 | 144 | 152 | 8 | 300 | --- | 0.25 | 0.7 | 9/250 | 5 | 100 | 1/20 | Good | Good | Very Good |
| Example 6 | 6 | 144 | 152 | 12 | 300 | --- | 0.25 | 0.7 | 9/250 | 5 | 300 | 1/60 | Good | Good | Good |
| Example 7 | 7 | 144 | 152 | 12 | 200 | --- | 0.5 | 0.7 | 7/10 | 25 | 150 | 1/6 | Very Good | Good | Very Good |
| | | | | | | | | | | | | | | | |
| Comp. Ex. 1 | Comp. 1 | 144 | 152 | 4.5 | 400 | 5 | 0.25 | --- | --- | 5 | --- | --- | Good | Poor | Good |
| Comp. Ex. 2 | Comp. 2 | 144 | 152 | 12 | 300 | 15 | 0.75 | --- | --- | 15 | --- | --- | Very Good | Good | Poor |
| Comp. Ex. 3 | Comp. 3 | 144 | 152 | 12 | 300 | --- | 0.005 | 0.005 | 1/1 | 5 | 100 | 1/20 | Poor | Poor | Poor |
| Comp. Ex. 4 | Comp. 4 | 144 | 152 | 12 | 300 | --- | 0.1 | 0.7 | 7/50 | 0.02 | 1000 | 1/50000 | Poor | Poor | Good |
| Comp. Ex. 5 | Comp. 5 | 144 | 152 | 12 | 300 | --- | 3 | 0.0002 | 15000/1 | 35 | 500 | 7/100 | Very Good | Good | Poor |
| (1mil=25.4 $\mu$m, 1cpsi=0.00155 cell/mm$^2$) | | | | | | | | | | | | | | | |

(Discussion)

Example 1 shows a representative (the best) example of the present invention, and Example 2 shows the case where the size (S2) of the pore diameter at the second peak (P2) is small. Example 3 shows the case that the logarithmic differential pore volume at the first peak (P1) and the logarithmic differential pore volume at the second peak (P2) are small, where the pressure loss increases, which is somewhat disadvantageous. The Example 4 shows the case that the size (S1) of the pore diameter at the first peak (P1) is large, which has excellent catalyst-carrying properties and purification performance. Incidentally, Fig. 8 shows a pore diameter distribution of the pores of the partition walls of the honeycomb catalyst body of Example 4. Example 5 shows the case that the partition walls have a thin thickness of 8 mil, which is excellent in pressure loss properties.
Example 6 shows the case that the size (S2) of the pores at the second peak (P2) is large. Example 7 shows the case that the size (S1) of the pores at the first peak (P1) is large, which has excellent catalyst-carrying properties, good purification performance even when the number of cells is small (the cell density is small), and low pressure loss.

Comparative Examples 1 and 2 show the cases having one peak in a region where the pore size is 0.05 $\mu$m or more. Comparative Example 1 shows the case of the partition wall thickness of 4.5 mil, which is extremely thin with inferior purification performance. Comparative Example 2 shows the case that the pore diameter is 15 $\mu$m, the logarithmic differential pore volume at the second peak (P1) is 0.75 cc/g, and the pressure loss increases. Comparative Examples 3 to 5 show the cases having two peaks in a region where the pore sizes are 0.05 $\mu$m or more. Comparative Example 3 shows the case that both the logarithmic differential pore volume at the first peak (P1) and the logarithmic differential pore volume at the second peak (P2) are smaller than the predetermined value, where all of the catalyst-carrying properties, purification performance, and pressure loss are inferior. Comparative Example 4 shows the case that the size (S1) of the pores at the first peak (P1) is smaller than the predetermined value and that the size (S2) of the pores at the second peak (P2) is larger than the predetermined value, which has inferior catalyst-carrying properties and purification performance though it is good in pressure loss. Comparative Example 5 shows the case that the logarithmic differential pore volume at the second peak (P2) is smaller than the predetermined value, where the pressure loss increases.

Industrial Applicability

A honeycomb structure and a honeycomb catalyst body of the present invention are suitably used in various kinds of fields where purification of components to be purified contained in exhaust gas is required, for example, industrial fields of the automobile industry, the mechanical industry, the ceramic industry, and the like, where purification of exhaust gas from internal combustion engines, combustion apparatuses, and the like, is required.

**Claims**

1. A honeycomb structure for a catalyst carrier comprising: porous partition walls disposed so as to form a plurality of cells extending over the two end faces and has a large number of pores, and a gas-passage blocking portion (plugged portion) at least at end portions of the cells or in a part of the insides of the cells to allow gas to practically flow in the partition walls;
   wherein a pore diameter distribution of the partition walls (shown by a plotted graph with the axis of abscissas showing pore diameter size and the axis of ordinates showing pore volume) has two or more peaks with respect to pore volume in a region where the pore diameter is 0.05 $\mu$m or more, and
   at least one of the two or more peaks is in the region where the pore diameter is 50 $\mu$m or more.

2. A honeycomb structure according to claim 1 wherein, in a first peak (P1) and a second peak (P2) which are arbitrary two peaks among the two or more peaks, a pore volume (N1) at the first peak (P1) is 0.01 to 3.0 cc/g in the case that the pore volume (N1) is expressed by a logarithmic differential pore volume, and a pore volume (N2) at the second peak (P2) is 0.01 to 5.0 cc/g in the case that the pore volume (N2) is expressed by a logarithmic differential pore volume.

3. A honeycomb structure according to claim 1, wherein, in a first peak (P1) and a second peak (P2) which are arbitrary two peaks among the two or more peaks, a ratio (N1:N2) of the pore volume (N1) at the first peak (P1) to the pore volume (N2) at the second peak (P2) is 1:100 to 10:1.

4. A honeycomb structure according any one of claims 1 to 3, wherein a pore diameter size (S1) at the first peak (P1) is 1 to 35 $\mu$m, and a pore diameter size (S2) at the second peak (P2) is 50 to 500 $\mu$m.

5. A honeycomb structure according to any one of claims 2 to 4, wherein a ratio (S1:S2) of the pore diameter size (S1) at the first peak (P1) to the pore diameter size (S2) at the second peak (P2) is 1:10000 to 4:5.

6. A honeycomb catalyst body, wherein a catalyst is carried on a honeycomb structure according to any one of claims 1 to 5.

7. A honeycomb catalyst body according to claim 6, wherein the honeycomb structure satisfies a condition of a pore diameter distribution in pores of the partition walls according to any one of the claims 1 to 5.

8. An exhaust gas treatment system using a honeycomb structure according to any one of the claims 1 to 5 or a honeycomb catalyst body according to claim 6 or 7.

FIG.1

FIG.2

FIG.3

FIG.4

FIG.5

FIG.6

FIG.7

FIG.8

EP 1 985 365 A1

| INTERNATIONAL SEARCH REPORT | International application No. |
|---|---|
| | PCT/JP2007/052652 |

A. CLASSIFICATION OF SUBJECT MATTER
*B01J35/04*(2006.01)i, *B01D53/86*(2006.01)i, *B01D53/94*(2006.01)i, *B01J23/63*
(2006.01)i, *B01J35/10*(2006.01)i, *F01N3/02*(2006.01)i, *F01N3/28*(2006.01)i

According to International Patent Classification (IPC) or to both national classification and IPC

B. FIELDS SEARCHED

Minimum documentation searched (classification system followed by classification symbols)
B01J35/04, B01D53/86, B01D53/94, B01J23/63, B01J35/10, F01N3/02, F01N3/28

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPI (DIALOG)

C. DOCUMENTS CONSIDERED TO BE RELEVANT

| Category* | Citation of document, with indication, where appropriate, of the relevant passages | Relevant to claim No. |
|---|---|---|
| X | WO 2002/096827 A1 (Ibiden Co., Ltd.), 05 December, 2002 (05.12.02), Claims; page 11, lines 4 to 23; page 12, line 14 to page 14, line 1; examples 1, 2; Figs. 2, 3 & EP 1403231 A1 & US 2004/0161596 A1 | 1-8 |
| A | JP 2005-246314 A (Toyota Motor Corp.), 15 September, 2005 (15.09.05), Claims (Family: none) | 1-8 |
| A | JP 9-313843 A (Matsushita Electric Industrial Co., Ltd.), 09 December, 1997 (09.12.97), Claims; Par. Nos. [0030] to [0034]; Fig. 4 (Family: none) | 1-8 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 March, 2007 (27.03.07) | 10 April, 2007 (10.04.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 985 365 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003033664 A